(19) Europäisches Patentamt

European Patent Office

Office européen des brevets

(11) **EP 4 468 202 A1**

(12) **EUROPEAN PATENT APPLICATION**

(43) Date of publication:
**27.11.2024 Bulletin 2024/48**

(21) Application number: **24154166.3**

(22) Date of filing: **26.01.2024**

(51) International Patent Classification (IPC):
**G06N 3/006** (2023.01)　　**G06F 8/41** (2018.01)
**G06N 3/10** (2006.01)　　**G06N 3/12** (2023.01)
**G06N 5/01** (2023.01)

(52) Cooperative Patent Classification (CPC):
**G06N 3/10; G06F 8/443;** G06N 3/006; G06N 3/044;
G06N 3/045; G06N 3/0464; G06N 3/12; G06N 5/01;
Y02D 10/00

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **25.05.2023　CN 202310603567**

(71) Applicant: **Beijing Horizon Information
Technology Co., Ltd.
Beijing 100094 (CN)**

(72) Inventors:
• **SHEN, Biluo
  Beijing (CN)**
• **DENG, Bowen
  Beijing (CN)**
• **LI, Jianjun
  Beijing (CN)**
• **ZHANG, Qian
  Beijing (CN)**

(74) Representative: **Dehns Germany Partnerschaft
mbB
Theresienstraße 6-8
80333 München (DE)**

(54) **METHOD AND APPARATUS FOR COMPILING NEURAL NETWORK MODEL, AND METHOD AND APPARATUS FOR TRAINING OPTIMIZATION MODEL**

(57)　Embodiments of this disclosure provide a method and apparatus for compiling a neural network model, and a method and an apparatus for training an optimization model. The method includes: obtaining a to-be-compiled neural network model; determining an intermediate instruction sequence corresponding to the to-be-compiled neural network model based on the to-be-compiled neural network model; processing the intermediate instruction sequence by using a pre-trained instruction sequence optimization model, to obtain a target optimization parameter corresponding to the intermediate instruction sequence; determining an optimization instruction sequence corresponding to the intermediate instruction sequence based on the target optimization parameter; and converting the optimization instruction sequence into an executable instruction sequence, to obtain a target instruction sequence that is executable by a neural network processor corresponding to the to-be-compiled neural network model. According to the embodiments of this disclosure, compilation time can be greatly reduced, thereby effectively improving compilation efficiency.

| |
|---|
| Obtain a to-be-compiled neural network model — 201 |
| Determine an intermediate instruction sequence corresponding to the to-be-compiled neural network model based on the to-be-compiled neural network model — 202 |
| Process the intermediate instruction sequence by using a pre-trained instruction sequence optimization model, to obtain a target optimization parameter corresponding to the intermediate instruction sequence — 203 |
| Determine an optimization instruction sequence corresponding to the intermediate instruction sequence based on the target optimization parameter — 204 |
| Convert the optimization instruction sequence into an executable instruction sequence, to obtain a target instruction sequence that can be executed by a neural network processor corresponding to the to-be-compiled neural network model — 205 |

Fig.2

**Description**

**RELATED APPLICATION INFORMATION**

This application claims priority to a Chinese patent application Ser. No. 202310603567.7 filed on May 25, 2023, incorporated herein by reference.

**FIELD OF THE INVENTION**

This disclosure relates to technologies of artificial intelligence, and in particular, to a method for compiling a neural network model, a method for training an optimization model, an apparatus for compiling a neural network model, and an apparatus for training an optimization model.

**BACKGROUND OF THE INVENTION**

With rapid development of artificial intelligence, a deep neural network model (which may be referred to as a model for short) is widely applied in many fields such as computer vision, natural language processing, speech recognition, and autonomous driving. After a network structure of the model is determined, actual execution efficiency of the model mainly depends on hardware and a compiler. To improve the execution efficiency and a processing capability of the model, the compilation optimization technology is proposed and is applied in a process of compiling the model. The compilation optimization technology may improve the execution efficiency and the processing capability of the model without increasing hardware costs. In a compilation process of a related technology, the model is usually first converted into an instruction sequence of an intermediate representation (which may be referred to as an intermediate instruction sequence or a computational graph), so as to manually formulate a rule for identifying an optimizable part for the model. Moreover, a heuristic algorithm is designed for the optimizable part to traverse various optimization solutions (optimization instruction sequences) to find an optimal optimization solution. However, a method for determining the optimal optimization solution based on the heuristic algorithm takes long traversal time, resulting in long compilation time and low compilation efficiency.

**SUMMARY OF THE INVENTION**

To resolve the foregoing technical problems of long compilation time and low efficiency, embodiments of this disclosure provide a method and apparatus for compiling a neural network model, and a method and apparatus for training an optimization model, to reduce compilation time and improve compilation efficiency.

According to a first aspect of this disclosure, a method for compiling a neural network model is provided, including: obtaining a to-be-compiled neural network model; determining an intermediate instruction sequence corresponding to the to-be-compiled neural network model based on the to-be-compiled neural network model; processing the intermediate instruction sequence by using a pre-trained instruction sequence optimization model, to obtain a target optimization parameter corresponding to the intermediate instruction sequence; determining an optimization instruction sequence corresponding to the intermediate instruction sequence based on the target optimization parameter; and converting the optimization instruction sequence into an executable instruction sequence, to obtain a target instruction sequence that is executable by a neural network processor corresponding to the to-be-compiled neural network model.

According to a second aspect of this disclosure, a method for training an instruction sequence optimization model is provided, including: obtaining training intermediate instruction sequences respectively corresponding to at least one neural network model and optimal optimization parameter labels respectively corresponding to all the training intermediate instruction sequences; and training a pre-established instruction sequence optimization network based on all the training intermediate instruction sequences and the optimal optimization parameter labels respectively corresponding to all the training intermediate instruction sequences, to obtain a trained instruction sequence optimization model.

According to a third aspect of this disclosure, an apparatus for compiling a neural network model is provided, including: a first obtaining module, configured to obtain a to-be-compiled neural network model; a first processing module, configured to determine an intermediate instruction sequence corresponding to the to-be-compiled neural network model based on the to-be-compiled neural network model; a second processing module, configured to process the intermediate instruction sequence by using a pre-trained instruction sequence optimization model, to obtain a target optimization parameter corresponding to the intermediate instruction sequence; a third processing module, configured to determine an optimization instruction sequence corresponding to the intermediate instruction sequence based on the target optimization parameter; and a fourth processing module, configured to convert the optimization instruction sequence into an executable instruction sequence, to obtain a target instruction sequence that is executable by a neural network processor corresponding to the to-be-compiled neural network model.

According to a fourth aspect of this disclosure, an apparatus for training an instruction sequence optimization model is provided, including:
a second obtaining module, configured to obtain training intermediate instruction sequences respectively corresponding to at least one neural network model and optimal optimization parameter labels respectively corresponding to all the training intermediate instruction sequences; and a fifth processing module, configured to train a pre-established instruction sequence optimization network based on all the training intermediate instruction sequences and the optimal optimization parameter labels respectively corresponding to all the training intermediate instruction sequences, to obtain a trained instruction sequence optimization model.

According to a fifth aspect of this disclosure, a computer readable storage medium is provided. The storage medium stores a computer program, and the computer program is used for implementing the method for compiling a neural network model according to any one of the foregoing embodiments of this disclosure, or is used for implementing the method for training an instruction sequence optimization model according to any one of the foregoing embodiments of this disclosure.

According to a sixth aspect of this disclosure, an electronic device is provided. The electronic device includes: a processor; and a memory configured to store processor-executable instructions, wherein the processor is configured to read the executable instructions from the memory, and execute the instructions to implement the method for compiling a neural network model according to any one of the foregoing embodiments of this disclosure, or execute the instructions to implement the method for training an instruction sequence optimization model according to any one of the foregoing embodiments of this disclosure.

According to a seventh aspect of this disclosure, a computer program product is provided. When instructions in the computer program product are executed by a processor, the method for compiling a neural network model according to any one of the foregoing embodiments of this disclosure is implemented, or the method for training an instruction sequence optimization model according to any one of the foregoing embodiments of this disclosure is implemented.

Based on the method for compiling a neural network model, the method for training an optimization model, the apparatus for compiling a neural network model, and the apparatus for training an optimization model that are provided in the foregoing embodiments of this disclosure, during a compilation process for the neural network model, after the intermediate instruction sequence corresponding to the to-be-compiled neural network model is obtained, an optimal optimization parameter may be quickly obtained by using the pre-trained instruction sequence optimization model, so that an optimal optimization instruction sequence corresponding to the intermediate instruction sequence may be determined. The optimization instruction sequence is converted into the executable instruction sequence, so that the target instruction sequence that may be executed by the neural network processor corresponding to the to-be-compiled neural network model may be obtained, thereby completing compilation for the neural network model. Compared to manually formulating a rule and designing a heuristic algorithm, determining the optimal optimization instruction sequence by using the instruction sequence optimization model may greatly reduce compilation time, so that compilation efficiency may be effectively improved.

## BRIEF DESCRIPTION OF THE DRAWINGS

FIG 1 is an exemplary application scenario of a method for compiling a neural network model according to this disclosure;

FIG 2 is a schematic flowchart of a method for compiling a neural network model according to an exemplary embodiment of this disclosure;

FIG 3 is a schematic diagram illustrating a splitting principle of a computational subgraph according to an exemplary embodiment of this disclosure;

FIG 4 is a schematic flowchart of a method for compiling a neural network model according to another exemplary embodiment of this disclosure;

FIG 5 is a schematic diagram of a network structure of an instruction sequence optimization model according to an exemplary embodiment of this disclosure;

FIG 6 is a schematic flowchart of a method for compiling a neural network model according to still another exemplary embodiment of this disclosure;

FIG 7 is a schematic diagram of a network structure of an instruction sequence optimization model according to another exemplary embodiment of this disclosure;

FIG 8 is a schematic flowchart of a method for training an instruction sequence optimization model according to an exemplary embodiment of this disclosure;

FIG 9 is a schematic flowchart of a method for training an instruction sequence optimization model according to another exemplary embodiment of this disclosure;

FIG 10 is a schematic flowchart of a method for training an instruction sequence optimization model according to still another exemplary embodiment of this disclosure;

FIG 11 is a schematic diagram of a network structure of an instruction sequence optimization model according to still another exemplary embodiment of this disclosure;

FIG 12 is a schematic diagram of a structure of an apparatus for compiling a neural network model according to an exemplary embodiment of this disclosure;

FIG 13 is a schematic diagram of a structure of an apparatus for compiling a neural network model according to another exemplary embodiment of this disclosure;

FIG 14 is a schematic diagram of a structure of an apparatus for compiling a neural network model according to still another exemplary embodiment of this disclosure;

FIG 15 is a schematic diagram of a structure of an apparatus for training an instruction sequence optimization model according to an exemplary embodiment of this disclosure;

FIG 16 is a schematic diagram of a structure of an apparatus for training an instruction sequence optimization model according to another exemplary embodiment of this disclosure;

FIG 17 is a schematic diagram of a structure of an apparatus for training an instruction sequence optimization model according to still another exemplary embodiment of this disclosure; and

FIG 18 is a diagram of a structure of an electronic device according to an embodiment of this disclosure.

## DETAILED DESCRIPTION OF THE EMBODIMENTS

To explain this disclosure, exemplary embodiments of this disclosure are described below in detail with reference to accompanying drawings. Obviously, the described embodiments are merely a part, rather than all of embodiments of this disclosure. It should be understood that this disclosure is not limited by the exemplary embodiments.

It should be noted that unless otherwise specified, the scope of this disclosure is not limited by relative arrangement, numeric expressions, and numerical values of components and steps described in these embodiments.

Overview of this disclosure

In a process of implementing this disclosure, the inventor finds that with rapid development of artificial intelligence, a deep neural network model (which may be referred to as a model for short) is widely applied in many fields such as computer vision, natural language processing, speech recognition, and autonomous driving. After a network structure of the model is determined, actual execution efficiency of the model mainly depends on hardware and a compiler. To improve the execution efficiency and a processing capability of the model, the compilation optimization technology is proposed and is applied in a process of compiling the model. The compilation optimization technology may improve the execution efficiency and the processing capability of the model without increasing hardware costs. In a compilation process of a related technology, the model is usually first converted into an instruction sequence of an intermediate representation (which may be referred to as an intermediate instruction sequence or a computational graph), so as to manually formulate a rule for identifying an optimizable part for the model. Moreover, a heuristic algorithm is designed for the optimizable part to traverse various optimization solutions (optimization instruction sequences) to find an optimal optimization solution. However, a method for determining the optimal optimization solution based on the heuristic algorithm takes long traversal time, resulting in long compilation time and low compilation efficiency.

Exemplary overview

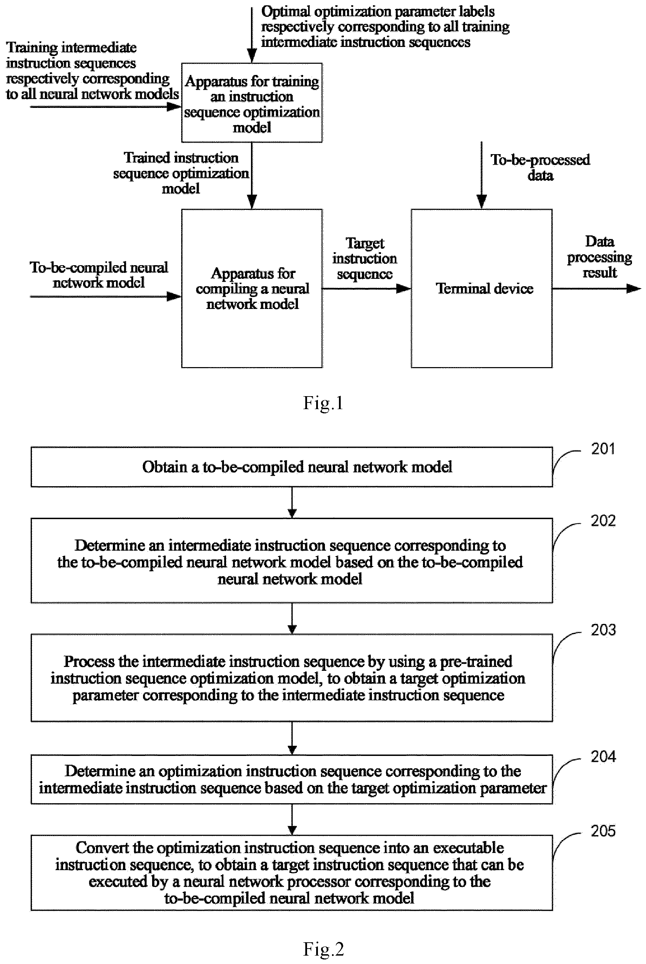

FIG 1 is an exemplary application scenario of a method for compiling a neural network model according to this disclosure.

In scenarios such as computer vision, natural language processing, speech recognition, and autonomous driving, intermediate instruction sequences respectively corresponding to a plurality of neural network models may be obtained to serve as training intermediate instruction sequences, and parameters of optimal optimization solutions respectively corresponding to all the intermediate instruction sequences may be determined as optimal optimization parameter labels respectively corresponding to all the training intermediate instruction sequences. A method for training an instruction sequence optimization model is implemented by using an apparatus for training an instruction sequence optimization model in this disclosure. A pre-established instruction sequence optimization network is trained based on all the training intermediate instruction sequences and the corresponding optimal optimization parameter labels, to obtain a trained instruction sequence optimization model. Moreover, the instruction sequence optimization model may be configured to an apparatus for compiling a neural network model in this disclosure. When a to-be-compiled neural network model in this scenario needs to be compiled, the method for compiling a neural network model in this disclosure (which is implemented by the apparatus for compiling a neural network model in this disclosure) may be applied to determine an intermediate instruction sequence corresponding to the to-be-compiled neural network model; and the intermediate instruction sequence is processed by using the pre-configured instruction sequence optimization model, to obtain a target optimization parameter corresponding to the intermediate instruction sequence. The target optimization parameter is an optimization parameter that is predicted by the instruction sequence optimization model and that corresponds to the optimal optimization solution of the intermediate instruction sequence, so that an optimization instruction sequence corresponding to the intermediate instruction sequence may be determined based on the target optimization parameter. The optimization instruction sequence is converted into an executable instruction sequence of a neural network processor, so that a target instruction sequence that may be executed by the neural network processor corresponding to the to-be-compiled neural network model may be obtained. The target instruction sequence is deployed onto a corresponding terminal device to process to-be-processed data to obtain a corresponding data processing result. The terminal device may be a device that, in any scenario, needs to perform corresponding data processing based on the target instruction sequence of the to-be-compiled neural network model, such as an in-car computing platform in the autonomous driving scenario, or a device for speech recognition processing in the speech recognition scenario. The to-be-processed data may be determined based on a specific task type of the to-be-compiled neural network model. For example, if the to-be-compiled neural network model is a target detection model in the autonomous driving scenario, the to-be-processed data may be an image captured by a camera in a vehicle or may be a preprocessed image. For another example, if the to-be-compiled neural network model is a speech recognition model, the to-be-processed data may be speech data to be recognized. This may be specifically set according to actual requirements. According to this disclosure, the optimal optimization instruction sequence is quickly determined by using the trained instruction sequence optimization model, so that compilation time may be greatly reduced, thereby effectively improving compilation efficiency.

The method for compiling a neural network model provided in this embodiment of this disclosure may be applied to any scenario that requires compilation for a neural network model, and is not limited to the foregoing scenarios.

Exemplary method

FIG 2 is a schematic flowchart of a method for compiling a neural network model according to an exemplary embodiment of this disclosure. This embodiment may be applied to an electronic device such as a server or a terminal. As shown in FIG 2, the method includes the following steps.

Step 201. Obtain a to-be-compiled neural network model.

The to-be-compiled neural network model may be any task type and any network structure of neural network models. This may be specifically set according to actual requirements. The task type may include, for example, object detection, semantic segmentation, image classification, speech recognition, and text recognition. The network structure may include, for example, a network structure based on a convolutional neural network and a series thereof, a network structure based on a Transformer and a series thereof, a network structure based on a RNN (recurrent neural network) and a series thereof, and a network structure based on a MLP (multilayer perceptron) and a series thereof.

Step 202. Determine an intermediate instruction sequence corresponding to the to-be-compiled neural network model based on the to-be-compiled neural network model.

The intermediate instruction sequence is an intermediate representation between a programming language and executable instructions, and may also be referred to as an initial computational graph. The initial computational graph may include at least one computational subgraph. Each computational subgraph includes at least one operator node and connection relationships between various operator nodes. In other words, the intermediate instruction sequence represents initial calculation order relationships between intermediate instructions corresponding to various operators in the to-be-compiled neural network model. For example, the operators may include an operator for convolution operation, an operator for matrix multiplication, an operator for corresponding element addition, an operator for corresponding element multiplication, and a data loading operator, a data storage operator, and the like that are required for various calculation operator operations. The data loading operator is used to load a tensor, a weight, and other data for corresponding operations. The data storage operator is used to store an operation result.

In some optional embodiments, a manner for obtaining the intermediate instruction sequence may be set according to actual requirements. For example, the to-be-compiled neural network model may be preliminarily compiled based on any implementable compiler, to convert the to-be-compiled neural network model from a programming language to an intermediate instruction sequence of an intermediate representation. This is not specifically limited.

Step 203. Process the intermediate instruction sequence by using a pre-trained instruction sequence optimization model, to obtain a target optimization parameter corresponding to the intermediate instruction sequence.

A specific network structure of the instruction sequence optimization model may be set according to actual requirements. For example, a network structure based on a recurrent neural network or a network structure based on a convolutional neural network may be employed, which is not specifically limited. The instruction sequence optimization model may be pre-obtained through training based on training intermediate instruction sequences of a plurality of pre-obtained neural network models and corresponding optimal optimization parameter labels. Specific content of the target optimization parameter may be set according to actual requirements. Specifically, optimization manners with commonality may be represented by using parameters based on optimizable manners of intermediate instruction sequences of various neural network models. For example, the target optimization parameter may include a parameter for determining an operator execution mode (which may be referred to as an operator execution mode parameter), a parameter for determining a memory usage policy (which may be referred to as a memory management parameter), and a parameter for determining a tensor splitting manner (which may be referred to as a tensor splitting parameter).

The operator execution mode parameter represents an execution mode when an operator is executed by hardware. Generally, the execution mode for the hardware to execute the operator may include at least one mode. For example, it may include a default execution mode and a sharing slice execution mode; and it may include more other modes. This is not specifically limited. Execution modes included in different operators may be the same or different, depending on a condition of the hardware. The operator execution mode parameter included in the target optimization parameter is an optimal execution mode that is predicted.

For the memory management parameter, a memory size of each layer for inference, memory application time, and memory free time may be determined after the network structure of the neural network model is determined. The memory size is a size of an interlayer tensor, the memory application time is prior to generation of the tensor by a generator, and the memory free time is after the tensor is consumed by all consumers (users). Therefore, a memory for an inference scenario of the neural network model may be learned clearly, and thus model optimization may be implemented by optimizing memory layout, thereby reducing memory wastes. On this basis, the memory layout is represented by using the memory management parameter. Optimal memory management parameters of various neural network models are learned, so that an optimal memory management parameter is predicted for the to-be-compiled neural network model. The memory management parameters include, for example, a prefree parameter, which may include two states: prefree and non-prefree. The prefree state indicates that when the computational subgraph is scheduled subsequently, it is needed to free output of a previous computational subgraph to a memory from a cache in advance. The memory management parameters may also include other memory management related parameters, which may be specifically set according to actual requirements.

The tensor splitting parameter represents a splitting manner and a splitting quantity for an input tensor of a calculation operator. For different calculation operators, at least one splitting manner may be set based on a splittable principle of the tensor of the calculation operator, and at least one splitting quantity may be set for each splitting manner. Combinations of different splitting manners and splitting quantities are represented by using different tensor splitting parameters. For example, for a convolution operator, a splitting manner for a tensor of H*W may be: splitting the tensor into a plurality of sub tensors of H1*W by height, or splitting the tensor into a plurality of sub tensors of H*W1 by width, or splitting the tensor into a plurality of sub tensors of H1*W1 based on two dimensions. Herein, there are three splitting manners: splitting by height, splitting by width, and splitting based on two dimensions. Each splitting manner may correspond to a plurality of splitting quantities. In practical applications, any splitting quantity under any splitting manner may be taken as a tensor splitting parameter; that is, it may correspond to one splitting type. For example, the splitting type may be identified through a code. Different splitting types correspond to different codes.

In some optional embodiments, the target optimization parameter may include optimal optimization parameters respectively corresponding to various optimizable computational subgraphs in the intermediate instruction sequence. The optimizable computational subgraph may be learned during a training process by the instruction sequence optimization model. Because the network structure of the neural network model is usually composed of some general operators, such as the convolution operator, the operator for matrix multiplication, and the operator for corresponding element addition that are described above, whether a computational subgraph including these operators may be optimized may be determined based on operational characteristics of the operators. For example, a computational subgraph including the convolution operator may be optimized through tensor splitting, and a computational subgraph including the operator for element addition may be optimized through tensor splitting.

Step 204. Determine an optimization instruction sequence corresponding to the intermediate instruction sequence based on the target optimization parameter.

After the target optimization parameter is determined, the intermediate instruction sequence may be optimized based on the target optimization parameter, to obtain the corresponding optimization instruction sequence.

For example, the computational subgraph is split into computational subgraphs whose quantity corresponds to the tensor splitting parameter, based on a tensor splitting parameter corresponding to any computational subgraph included in the target optimization parameter.

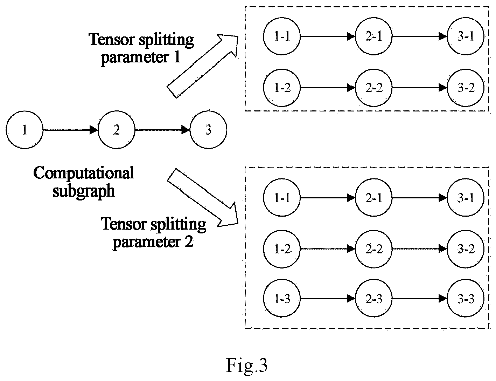

For example, FIG 3 is a schematic diagram illustrating a splitting principle of a computational subgraph according to an exemplary embodiment of this disclosure. A computational subgraph in this example includes three operator nodes, such as an operator node for data loading, an operator node for element addition, and an operator node for data storage. Two types of splitting are performed respectively by using two different tensor splitting parameters. The computational subgraph is split into two target computational subgraphs by using a tensor splitting parameter 1. In other words, the input tensor is split into two sub-tensors for separate operations. The computational subgraph is split into three target computational subgraphs by using a tensor splitting parameter 2.

Step 205. Convert the optimization instruction sequence into an executable instruction sequence, to obtain a target instruction sequence that can be executed by a neural network processor corresponding to the to-be-compiled neural network model.

The executable instruction sequence refers to a binary instruction sequence that may be executed by hardware. The neural network processor is a processor that may be configured to accelerate the neural network model to improve a model inference speed. An objective of compiling the to-be-compiled neural network model is to obtain the target instruction sequence that can be executed by the neural network processor, so that model inference may be performed by using the neural network processor, thereby improving the inference speed. The optimization instruction sequence may be converted into the executable instruction sequence according to any implementable manner. For example, the optimization instruction sequence is converted into the executable instruction sequence based on a compiler of hardware (that is, the neural network processor) adapted to execute the target instruction sequence. This is not limited in this disclosure.

According to the method for compiling a neural network model provided in this embodiment, during a compilation process for the neural network model, after the intermediate instruction sequence corresponding to the to-be-compiled neural network model is obtained, an optimal optimization parameter may be quickly obtained by using the pre-trained instruction sequence optimization model, so that an optimal optimization instruction sequence corresponding to the intermediate instruction sequence may be determined. The optimization instruction sequence is converted into the executable instruction sequence, so that the target instruction sequence that may be executed by the neural network processor corresponding to the to-be-compiled neural network model may be obtained, thereby completing compilation for the neural network model. Determining the optimal optimization instruction sequence by using the instruction sequence optimization model may greatly reduce compilation time, so that compilation efficiency may be effectively improved.

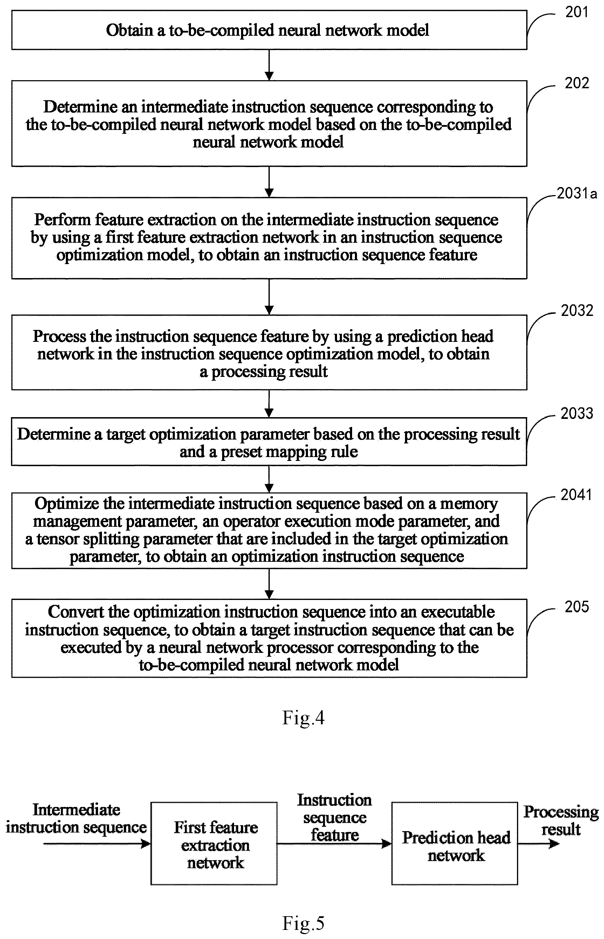

FIG 4 is a schematic flowchart of a method for compiling a neural network model according to another exemplary embodiment of this disclosure.

In an optional embodiment, step 203 may specifically include the following steps.

Step 2031a. Perform feature extraction on the intermediate instruction sequence by using a first feature extraction network in the instruction sequence optimization model, to obtain an instruction sequence feature.

The first feature extraction network may use any implementable network structure, for example, a feature extraction network based on a recurrent neural network or a feature extraction network based on a convolutional neural network. This may be specifically set according to actual requirements.

Step 2032. Process the instruction sequence feature by using a prediction head network in the instruction sequence optimization model, to obtain a processing result.

The processing result includes an optimization parameter prediction probability corresponding to the intermediate instruction sequence. The optimization parameter prediction probability may include optimization parameter prediction probabilities respectively corresponding to various computational subgraphs in at least one optimizable computational subgraph. For each optimizable computational subgraph, its corresponding optimization parameter prediction probability may include predicted probabilities corresponding to various parameters. For example, the predicted probabilities may include a probability of at least one state corresponding to the prefree parameter in the memory management parameter, probabilities of various splitting types corresponding to the tensor splitting parameter, and probabilities of various execution modes of the operator execution mode. A specific network structure of the prediction head network may be configured according to actual requirements. For example, the prediction head network may be a head network based on fully connected layers.

In an optional embodiment, for the tensor splitting parameter, the processing result may include a predicted value of the splitting quantity, which may be a decimal, such as 2.4 or 3.7.

For example, for the prefree parameter, 1 represents the prefree state, 0 represents the non-prefree state, and a corresponding predicted probability is a probability value between 0 and 1.

Step 2033. Determine the target optimization parameter based on the processing result and a preset mapping rule.

The preset mapping rule may be set according to a specific type of a parameter. For example, for a binary classification parameter, a probability threshold may be set, and a predicted probability of this parameter is compared with the probability threshold. If the predicted probability is greater than the probability threshold, it indicates that the parameter belongs to one classification. If the predicted probability is less than the probability threshold, it indicates that the parameter belongs to another classification. For a plurality types of parameters, a parameter with a highest probability may be selected as an optimal parameter. For a predicted value of the splitting quantity, rounding may be performed based on a rounding rule, so as to map the predicted value as the splitting quantity. For example, for a certain operator, if a predicted value of a predicted tensor splitting quantity is 2.4, the predicted value of the predicted tensor splitting quantity may be converted to an integer according to a rounding rule or other intpart rule. For example, 2.4 is rounded off or rounded down to 2.

For example, for the prefree parameter, the processing result may include a predicted probability of prefree. When the predicted probability is greater than a corresponding probability threshold, it is determined that output of a previous subgraph needs to be freed in advance by the computational subgraph.

In an optional embodiment, FIG 5 is a schematic diagram of a network structure of an instruction sequence optimization model according to an exemplary embodiment of this disclosure. In this example, the network structure of the instruction sequence optimization model includes the first feature extraction network and the prediction head network. The first feature extraction network is configured to perform feature extraction on the intermediate instruction sequence, to obtain the instruction sequence feature. The prediction head network is configured to predict the instruction sequence feature, to obtain the processing result.

In this embodiment, a predicted probability of the target optimization parameter is obtained by using the feature extraction network and the prediction head network, and a predicted optimal target optimization parameter is obtained through post-processing. In this way, fast and automated prediction for the optimal optimization parameter of the intermediate instruction sequence is implemented, thereby effectively improving compilation processing efficiency.

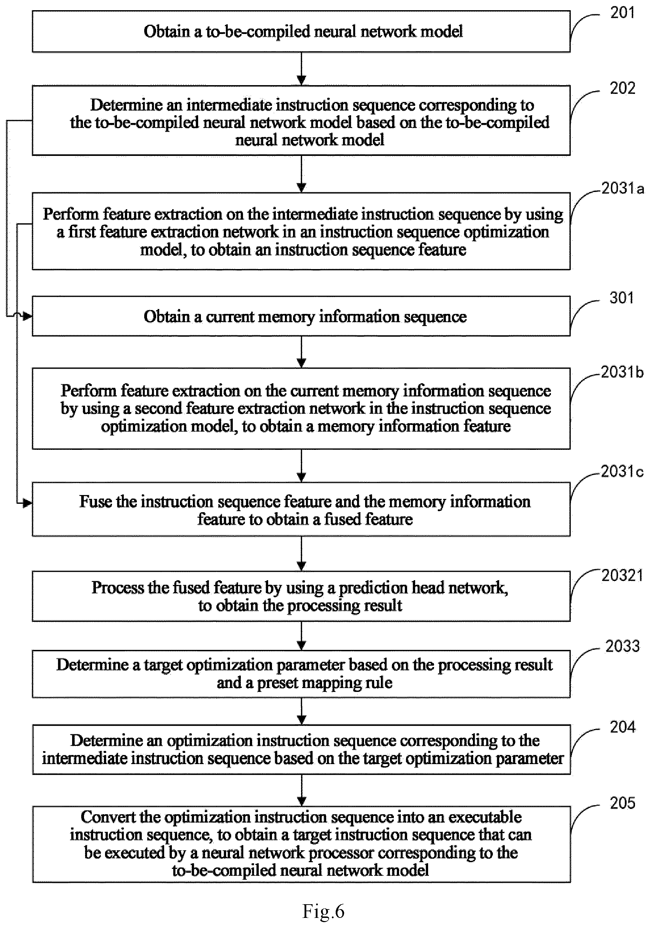

FIG 6 is a schematic flowchart of a method for compiling a neural network model according to still another exemplary embodiment of this disclosure.

In an optional embodiment, the method in this disclosure further includes:

Step 301. Obtain a current memory information sequence.

The current memory information sequence may be obtained when the intermediate instruction sequence is obtained through initial compilation. The current memory information sequence indicates a memory allocation strategy and an allocation result of the intermediate instruction sequence during instruction scheduling.

Step 203 of processing the intermediate instruction sequence by using the pre-trained instruction sequence optimization model, to obtain the target optimization parameter corresponding to the intermediate instruction sequence, further includes the following steps.

Step 2031b. Perform feature extraction on the current memory information sequence by using a second feature extraction network in the instruction sequence optimization model, to obtain a memory information feature.

A specific network structure of the second feature extraction network may be set according to actual requirements; for example, it may be a feature extraction network based on a recurrent neural network or a feature extraction network based on a fully connected network. This is not specifically limited. For example, the second feature extraction network may be a two-layer recurrent neural network, or may be a two-layer or multi-layer fully connected network.

Step 2031c. Fuse the instruction sequence feature and the memory information feature to obtain a fused feature.

A manner for fusing the instruction sequence feature and the memory information feature may be set according to actual requirements; for example, it may be concatenation or addition. This may be specifically set according to actual requirements. It should be noted that, if a dimension of the instruction sequence feature is completely different from that of the memory information feature, the instruction sequence feature and the memory information feature may be transformed through aggregation to be the same on at least one dimension for fusion.

Step 2032 of processing the instruction sequence feature by using the prediction head network in the instruction sequence optimization model, to obtain the processing result, includes:

Step 20321. Process the fused feature by using the prediction head network, to obtain the processing result.

For the prediction head network, reference may be made to the content described above, and details are not described herein again.

In this embodiment, accuracy of a prediction result may be further improved by using the current memory information sequence to assist in prediction of the optimal optimization parameter.

In an optional embodiment, step 2031c of fusing the instruction sequence feature and the memory information feature to obtain the fused feature includes: aggregating the instruction sequence feature according to a first aggregation rule, to obtain a first aggregation feature; aggregating the memory information feature according to a second aggregation rule, to obtain a second aggregation feature, wherein the second aggregation feature has a same dimension as the first aggregation feature in at least one direction; and concatenating the first aggregation feature and the second aggregation feature to obtain the fused feature.

The first aggregation rule and the second aggregation rule may be set according to actual requirements. An objective of aggregation is to make the instruction sequence feature be able to be concatenated with the memory information feature. The first aggregation rule and the second aggregation rule may both include an aggregation direction and an aggregation manner in this direction. The aggregation direction may include aggregation in row and aggregation in column. The aggregation manner may include taking any one of a mean value, a maximum value, a minimum value, or a sum in the corresponding aggregation direction. This may be specifically set according to actual requirements. Through aggregation, the instruction sequence feature can be concatenated with the memory information feature on at least one dimension.

For example, an instruction sequence feature is a feature of 16*2 and may be aggregated by column into a first aggregated feature of 1*2. The aggregation manner may be taking any one of a mean value, a maximum value, a minimum value, or a sum of 16 elements in each column. A memory information feature is a feature of 6*4 and may be aggregated by column into a second aggregated feature of 1*4. The aggregation manner may also be any one of the above, to concatenate the first aggregation feature with the second aggregation feature on a second dimension to obtain a fused feature of 1*6.

In this embodiment, through aggregation, the instruction sequence feature can be concatenated with the memory information feature on at least one dimension, thereby implementing feature fusion.

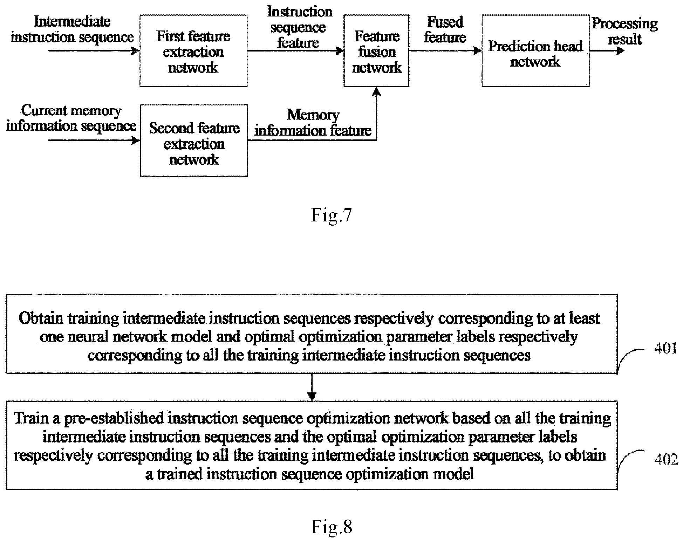

In an optional embodiment, FIG 7 is a schematic diagram of a network structure of an instruction sequence optimization model according to another exemplary embodiment of this disclosure. In this example, the network structure of the instruction sequence optimization model includes the first feature extraction network, the second feature extraction network, a feature fusion network, and the prediction head network. The first feature extraction network is configured to perform feature extraction on the intermediate instruction sequence, to obtain the instruction sequence feature. The second feature extraction network is configured to perform feature extraction on the current memory information sequence, to obtain the memory information feature. The feature fusion network is configured to fuse the instruction sequence feature and the memory information feature, to obtain the fused feature. The prediction head network is configured to predict the instruction sequence feature, to obtain the processing result.

In an optional embodiment, if the instruction sequence feature can be concatenated with the memory information feature on a preset dimension, the feature fusion network may be a concatenation layer (Concat).

In an optional embodiment, if the instruction sequence feature cannot be directly fused with the memory information feature, the feature fusion network may include a first aggregation network, a second aggregation network, and a concatenation layer. The first aggregation network is configured to aggregate the instruction sequence feature to obtain the first aggregation feature. The second aggregation network is configured to aggregate the memory information feature to obtain the second aggregation feature. The concatenation layer is configured to concatenate the first aggregation feature with the second aggregation feature to obtain the fused feature.

In an optional embodiment, the target optimization parameter includes a memory management parameter, an operator execution mode parameter, and a tensor splitting parameter. Step 204 of determining the optimization instruction sequence corresponding to the intermediate instruction sequence based on the target optimization parameter includes:
Step 2041. Optimize the intermediate instruction sequence based on a memory management parameter, an operator execution mode parameter, and a tensor splitting parameter that are included in the target optimization parameter, to obtain the optimization instruction sequence.

After the target optimization parameter is obtained, a corresponding instruction in the intermediate instruction sequence that needs to be optimized may be optimized based on the target optimization parameter. For example, a memory management related instruction in the intermediate instruction sequence is optimized based on the memory management parameter included in the target optimization parameter; an execution mode of a corresponding operator in the intermediate instruction sequence is updated based on the operator execution mode parameter; and an instruction sequence corresponding to a computational subgraph in the intermediate instruction sequence is split into a plurality sets of instruction sequences. In this case, the obtained optimization instruction sequence can be executed based on an optimal optimization solution corresponding to the target optimization parameter, so that the target instruction sequence obtained finally can have optimal performance after being deployed to a terminal device, such as an optimal memory usage strategy, memory waste reduction, an optimal operator concurrent execution capability, and computational efficiency improvement.

The foregoing embodiments of this disclosure may be implemented separately or in any combination without conflict. This may be specifically set according to actual requirements, and is not limited in this disclosure.

Any method for compiling a neural network model provided in the embodiments of this disclosure may be implemented by any suitable device with a data processing capability, including but not limited to a terminal device and a server. Alternatively, any method for compiling a neural network model provided in the embodiments of this disclosure may be implemented by a processor. For example, the processor implements any method for compiling a neural network model described in the embodiments of this disclosure by invoking corresponding instructions stored in a memory. Details are not described below again.

FIG 8 is a schematic flowchart of a method for training an instruction sequence optimization model according to an exemplary embodiment of this disclosure. This embodiment may be applied to an electronic device such as a server or a terminal. As shown in FIG 8, the method includes the following steps.

Step 401. Obtain training intermediate instruction sequences respectively corresponding to at least one neural network model and optimal optimization parameter labels respectively corresponding to all the training intermediate instruction sequences.

A manner for obtaining the training intermediate instruction sequence is similar to that for the intermediate instruction sequence described above, and details are not described herein. The optimal optimization parameter label corresponding to the training intermediate instruction sequence is an optimization parameter corresponding to a verified optimal optimization solution. The optimal optimization parameter label may be obtained in any implementable manner. For example, for any training intermediate instruction sequence, at least one training optimization instruction sequence corresponding to the training intermediate instruction sequence may be determined based on a preset algorithm, and performance corresponding to various training optimization instruction sequences may be determined in any implementable manner. The training optimization instruction sequence with optimal performance is determined through performance comparison, and an optimization parameter corresponding to the training optimization instruction sequence with the optimal performance is taken as the optimal optimization parameter label corresponding to the training intermediate instruction sequence. Through performance determining, for example, various training optimization instruction sequences may be converted into executable training optimization instruction sequences. Performance of the training optimization instruction sequence is determined by running the training optimization instruction sequence on a practical terminal device, or performance of the training optimization instruction sequence may be determined based on at least one of an simulator, a performance estimation algorithm and the like. The simulator is configured to simulate an execution process of the training optimization instruction sequence on the terminal device (or hardware), and obtain at least one performance indicator such as execution time, memory transfer times, and hardware utilization for executing each operation. This may be specifically set according to actual requirements. The performance of the training optimization instruction sequence is determined based on the obtained performance indicator. The performance estimation algorithm may include performance indicator calculation formulas for different operators, such as an execution time calculation formula. The performance indicator of the training optimization instruction sequence is calculated based on a situation about the operator included in the training optimization instruction sequence.

Step 402. Train a pre-established instruction sequence optimization network based on all the training intermediate instruction sequences and the optimal optimization parameter labels respectively corresponding to all the training intermediate instruction sequences, to obtain a trained instruction sequence optimization model.

For a specific structure of the instruction sequence optimization network, reference may be made to the foregoing embodiments, and details are not described herein again. During the training process, for any iteration, an instruction sequence optimization network updated from a previous iteration may be taken as a current instruction sequence optimization network, and each training intermediate instruction sequence is processed by using the current instruction sequence optimization network, to obtain a predicted processing result. The current instruction sequence optimization network is updated based on the predicted processing result and the corresponding optimal optimization parameter label, to obtain an updated instruction sequence optimization network. If the updated instruction sequence optimization network meets a training termination condition, the updated instruction sequence optimization network is taken as the trained instruction sequence optimization model. If the updated instruction sequence optimization network does not meet the training termination condition, a next iteration may be performed to take the updated instruction sequence optimization model as a current instruction sequence optimization model. The step of processing each training intermediate instruction sequence by using the current instruction sequence optimization network to obtain the predicted processing result is repeated, until the updated instruction sequence optimization network meets the training termination condition, thereby obtaining the trained instruction sequence optimization model.

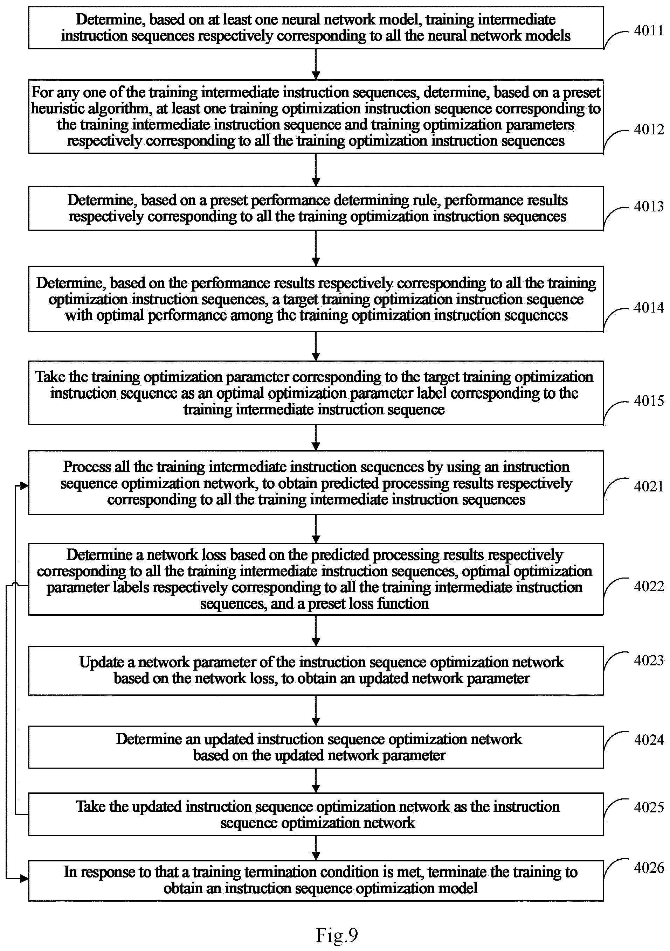

FIG 9 is a schematic flowchart of a method for training an instruction sequence optimization model according to another exemplary embodiment of this disclosure.

In an optional embodiment, step 401 of obtaining the training intermediate instruction sequences respectively corresponding to at least one neural network model and the optimal optimization parameter labels respectively corresponding to all the training intermediate instruction sequences includes the following steps.

Step 4011. Determine, based on at least one neural network model, training intermediate instruction sequences respectively corresponding to all the neural network models.

Step 4012. For any one of the training intermediate instruction sequences, determine, based on a preset heuristic algorithm, at least one training optimization instruction sequence corresponding to the training intermediate instruction sequence and training optimization parameters respectively corresponding to all the training optimization instruction sequences.

The preset heuristic algorithm may be set according to actual requirements, which is not limited in this disclosure. For example, the preset heuristic algorithm may be an algorithm that is used to determine the training optimization instruction sequence, and that is implemented based on at least one of algorithms such as a simulated annealing algorithm, a genetic algorithm, and an ant colony algorithm. The training optimization parameter may be determined based on a specific optimization situation of the training optimization instruction sequence relative to the training intermediate instruction sequence. For example, relative to the training intermediate instruction sequence, certain tensor splitting is performed on the training optimization instruction sequence, so that a tensor splitting parameter may be determined. An execution mode of a certain operator is updated, so that an operator execution mode parameter corresponding to the operator may be determined.

Step 4013. Determine, based on a preset performance determining rule, performance results respectively corresponding to all the training optimization instruction sequences.

The preset performance determining rule may include at least one of actual hardware execution, the simulator, and the performance estimation algorithm described above. For details, reference may be made to the content described above, and details are not described herein again. Performance indicator types of the performance result may be set according to actual requirements. For example, the performance result may include at least one of performance indicators such as execution time, memory transfer times, and utilization of various operators in hardware operation.

Step 4014. Determine, based on the performance results respectively corresponding to all the training optimization instruction sequences, a target training optimization instruction sequence with optimal performance among the training optimization instruction sequences.

A determining rule for optimal performance may be set according to actual requirements. For example, if focus is on execution time, a training optimization instruction sequence with shortest execution time may be used as the target training optimization instruction sequence. If a plurality of performance indicators need to be paid attention to comprehensively, the plurality of performance indicators may be weighted and summed according to a certain weight ratio to obtain comprehensive indicator values, wherein a training optimization instruction sequence with an optimal comprehensive indicator value may be used as the target training optimization instruction sequence. This may be specifically set according to actual requirements.

Step 4015. Take the training optimization parameter corresponding to the target training optimization instruction sequence as the optimal optimization parameter label corresponding to the training intermediate instruction sequence.

In this embodiment, performance corresponding to each training optimization instruction sequence is determined according to certain performance determining rule, so as to determine the optimal optimization parameter label corresponding to the training intermediate instruction sequence, thereby providing accurate and effective label data for model training.

In an optional embodiment, step 402 of training the pre-established instruction sequence optimization network based on all the training intermediate instruction sequences and the optimal optimization parameter labels respectively corresponding to all the training intermediate instruction sequences, to obtain the trained instruction sequence optimization, includes the following steps.

Step 4021. Process all the training intermediate instruction sequences by using the instruction sequence optimization network, to obtain predicted processing results respectively corresponding to all the training intermediate instruction sequences.

A specific operation principle of this step is similar to that for processing the intermediate instruction sequence, and details are not described herein.

Step 4022. Determine a network loss based on the predicted processing results respectively corresponding to all the training intermediate instruction sequences, the optimal optimization parameter labels respectively corresponding to all the training intermediate instruction sequences, and a preset loss function.

The preset loss function may be set according to actual requirements. For example, the preset loss function may be at least one of an absolute error loss function, a regularization loss function, and other loss functions.

In an optional embodiment, after the network loss is determined during each iteration process, whether the training termination condition is met may be determined based on the network loss, such as whether the network loss meets a preset condition, or whether a current iteration quantity reaches a preset quantity threshold. If the training termination condition is met, the training may be terminated, and the foregoing instruction sequence optimization network may be used as the trained instruction sequence optimization model. If the training termination condition is not met, a subsequent process is implemented.

Step 4023. Update a network parameter of the instruction sequence optimization network based on the network loss, to obtain an updated network parameter.

The network parameter may be updated by using any implementable descent algorithm, such as a stochastic gradient descent algorithm or a gradient descent algorithm with an adaptive learning rate.

Step 4024. Determine an updated instruction sequence optimization network based on the updated network parameter.

Step 4025. Take the updated instruction sequence optimization network as the instruction sequence optimization network. Return to step 4021.

Step 4026. In response to that a training termination condition is met, terminates the training to obtain the instruction sequence optimization model.

Step 4026 may be performed at any time during the iteration process. For example, step 4026 may be performed after step 4022. This may be specifically set according to actual requirements.

In an optional embodiment, step 4022 of determining the network loss based on the predicted processing results respectively corresponding to all the training intermediate instruction sequences, the optimal optimization parameter labels respectively corresponding to all the training intermediate instruction sequences, and the preset loss function, includes:

determining an absolute error loss based on the predicted processing results respectively corresponding to all the training intermediate instruction sequences, the optimal optimization parameter labels respectively corresponding to all the training intermediate instruction sequences, and an absolute error loss function; determining a regularization loss based on the current network parameter and a regularization loss function; and determining the network loss based on the absolute error loss and the regularization loss.

In an optional example, the preset loss function may be represented as follows:

$$L = L1 + L2$$

,

$$L1 = \frac{1}{N}\sum_{i=1}^{N}\left|y^i - p^i\right|$$

,

$$L2 = \frac{1}{2}\left|w\right|^2$$

,

and

$$p^i = f_w(x^i)$$

,

where $L1$ represents the absolute error loss function; $L2$ represents the regularization loss function; $f_w$ represents an instruction sequence optimization network containing a learnable parameter $w$; N represents a total quantity of data batches; represents a data batch number; $x^i$ represents a training intermediate instruction sequence for an $i^{th}$ batch of data; $y^i$ represents an optimal optimization parameter label for the $i^{th}$ batch of data; $p^i$ represents a predicted processing result of the training intermediate instruction sequence for the $i^{th}$ batch of data processed by the instruction sequence optimization network; $|y^i - p^i|$ represents an absolute value of $y^i - p^i$; and $|w|$ represents an absolute value of $w$.

In an optional embodiment, during updating of the network parameter, a gradient of the learnable parameter $w$ in the instruction sequence optimization network may be determined based on the loss function, and $w$ may be updated by using an optimizer based on the gradient of $w$. The optimizer may be any gradient descent optimizer, or may be a gradient free optimizer. Taking a stochastic gradient descent optimizer as an example, an update formula for the learnable parameter is w' = w - ηg, where w' represents an updated parameter, g represents a gradient, and η represents a learning rate (a learn rate or a study rate). The learning rate may be set according to actual requirements; for example, it may be set to 0.1.

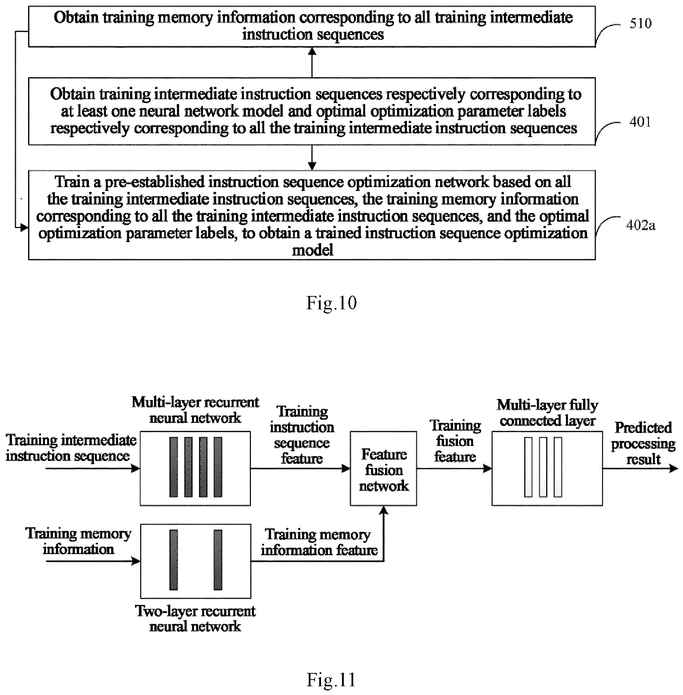

FIG 10 is a schematic flowchart of a method for training an instruction sequence optimization model according to still another exemplary embodiment of this disclosure.

In an optional embodiment, the method in this disclosure further includes:
Step 510. Obtain training memory information corresponding to all the training intermediate instruction sequences.

A manner for obtaining the training memory information is similar to that for the current memory information sequence described above, and details are not described herein.

Step 402 of training the pre-established instruction sequence optimization network based on all the training intermediate instruction sequences and the optimal optimization parameter labels respectively corresponding to all the training intermediate instruction sequences, to obtain the trained instruction sequence optimization includes:

Step 402a, training the pre-established instruction sequence optimization network based on all the training intermediate instruction sequences, the training memory information corresponding to all the training intermediate instruction sequences, and the optimal optimization parameter labels, to obtain the trained instruction sequence optimization model.

In this embodiment, for a network structure of the instruction sequence optimization network, reference may be made to the foregoing network structure in FIG 7, and details are not described herein again.

In an optional example, FIG 11 is a schematic diagram of a network structure of an instruction sequence optimization model according to still another exemplary embodiment of this disclosure. In this example, the first feature extraction network is a multi-layer recurrent neural network (RNN), the second feature extraction network is a two-layer recurrent neural network, and the prediction head network is a multi-layer fully connected network. For a structure of a feature fusion network, reference may be made to the content described above, and details are not described herein again.

In some optional embodiments of this disclosure, during training and application processes of the instruction sequence optimization model, the intermediate instruction sequence (or the training intermediate instruction sequence) and the current memory information sequence (or the training memory information) may be represented in text.

The foregoing embodiments of this disclosure may be implemented separately or in any combination without conflict. This may be specifically set according to actual requirements, and is not limited in this disclosure.

Any method for training an instruction sequence optimization model provided in the embodiments of this disclosure may be implemented by any suitable device with a data processing capability, including but not limited to a terminal device and a server. Alternatively, any method for training an instruction sequence optimization model provided in the embodiments of this disclosure may be implemented by a processor. For example, the processor implements any method for training an instruction sequence optimization model described in the embodiments of this disclosure by invoking corresponding instructions stored in a memory. Details are not described below again.

Exemplary apparatus

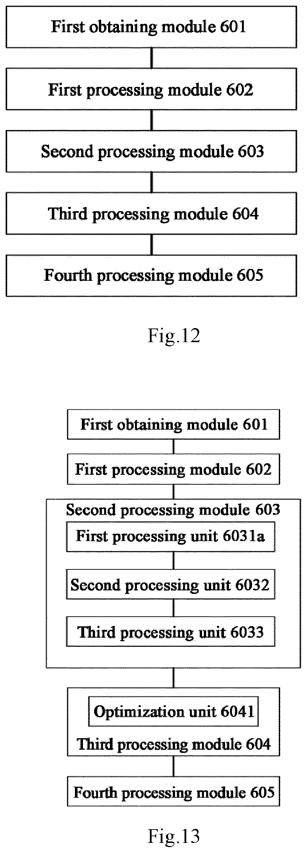

FIG 12 is a schematic diagram of a structure of an apparatus for compiling a neural network model according to an exemplary embodiment of this disclosure. The apparatus in this embodiment may be configured to implement corresponding embodiments of the method for compiling a neural network model in this disclosure. The apparatus shown in FIG 12 includes a first obtaining module 601, a first processing module 602, a second processing module 603, a third processing module 604, and a fourth processing module 605.

The first obtaining module 601 is configured to obtain a to-be-compiled neural network model.

The first processing module 602 is configured to determine an intermediate instruction sequence corresponding to the to-be-compiled neural network model based on the to-be-compiled neural network model.

The second processing module 603 is configured to process the intermediate instruction sequence by using a pre-trained instruction sequence optimization model, to obtain a target optimization parameter corresponding to the intermediate instruction sequence.

The third processing module 604 is configured to determine an optimization instruction sequence corresponding to the intermediate instruction sequence based on the target optimization parameter.

The fourth processing module 605 is configured to convert the optimization instruction sequence into an executable instruction sequence, to obtain a target instruction sequence that can be executed by a neural network processor corresponding to the to-be-compiled neural network model.

FIG 13 is a schematic diagram of a structure of an apparatus for compiling a neural network model according to another exemplary embodiment of this disclosure.

In an optional embodiment, the second processing module 603 includes a first processing unit 6031a, a second processing unit 6032, and a third processing unit 6033.

The first processing unit 6031a is configured to perform feature extraction on the intermediate instruction sequence by using a first feature extraction network in the instruction sequence optimization model, to obtain an instruction sequence feature.

The second processing unit 6032 is configured to process the instruction sequence feature by using a prediction head network in the instruction sequence optimization model, to obtain a processing result.

The processing result includes an optimization parameter prediction probability corresponding to the intermediate instruction sequence.

The third processing unit 6033 is configured to determine the target optimization parameter based on the processing result and a preset mapping rule.

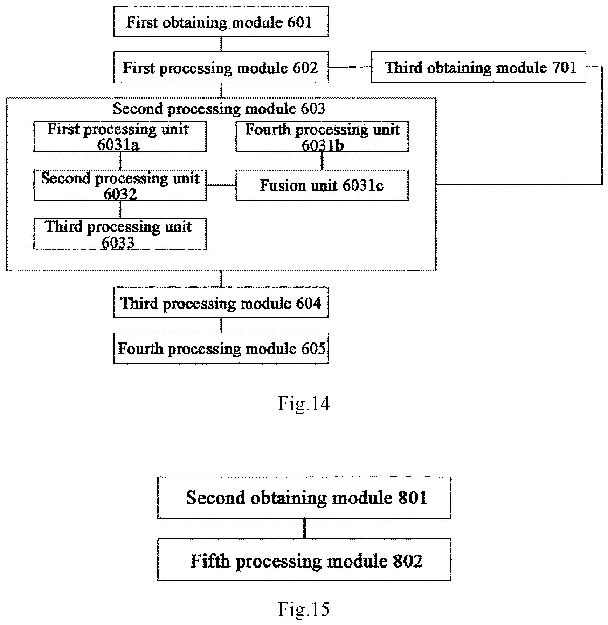

FIG 14 is a schematic diagram of a structure of an apparatus for compiling a neural network model according to still another exemplary embodiment of this disclosure.

In an optional embodiment, the apparatus in this disclosure further includes:

a third obtaining module 701, configured to obtain a current memory information sequence.

The second processing module 603 further includes:

a fourth processing unit 6031b, configured to perform feature extraction on the current memory information sequence by using a second feature extraction network in the instruction sequence optimization model, to obtain a memory information feature; and
a fusion unit 603 lc, configured to fuse the instruction sequence feature and the memory information feature to obtain a fused feature.

The second processing unit 6032 is further configured to process the fused feature by using the prediction head network, to obtain the processing result.

In an optional embodiment, the fusion unit 6031c is specifically configured to:
aggregate the instruction sequence feature according to a first aggregation rule, to obtain a first aggregation feature; aggregate the memory information feature according to a second aggregation rule, to obtain a second aggregation feature, wherein the second aggregation feature has a same dimension as the first aggregation feature in at least one direction; and concatenate the first aggregation feature and the second aggregation feature to obtain the fused feature.

In an optional embodiment, the target optimization parameter includes a memory management parameter, an operator execution mode parameter, and a tensor splitting parameter. The third processing module 604 includes:
an optimization unit 6041, configured to optimize the intermediate instruction sequence based on the memory management parameter, the operator execution mode parameter, and the tensor splitting parameter that are included in the target optimization parameter, to obtain the optimization instruction sequence.

For beneficial technical effects corresponding to the exemplary embodiments of this apparatus, reference may be made to the corresponding beneficial technical effects in the part of exemplary method described above, and details are not described herein again.

FIG 15 is a schematic diagram of a structure of an apparatus for training an instruction sequence optimization model according to an exemplary embodiment of this disclosure. The apparatus in this embodiment may be configured to implement corresponding embodiments of the method for training an instruction sequence optimization model in this disclosure. The apparatus shown in FIG 15 includes a second obtaining module 801 and a fifth processing module 802.

The second obtaining module 801 is configured to obtain training intermediate instruction sequences respectively corresponding to at least one neural network model and optimal optimization parameter labels respectively corresponding to all the training intermediate instruction sequences.

The fifth processing module 802 is configured to train a pre-established instruction sequence optimization network based on all the training intermediate instruction sequences and the optimal optimization parameter labels respectively corresponding to all the training intermediate instruction sequences, to obtain a trained instruction sequence optimization model.

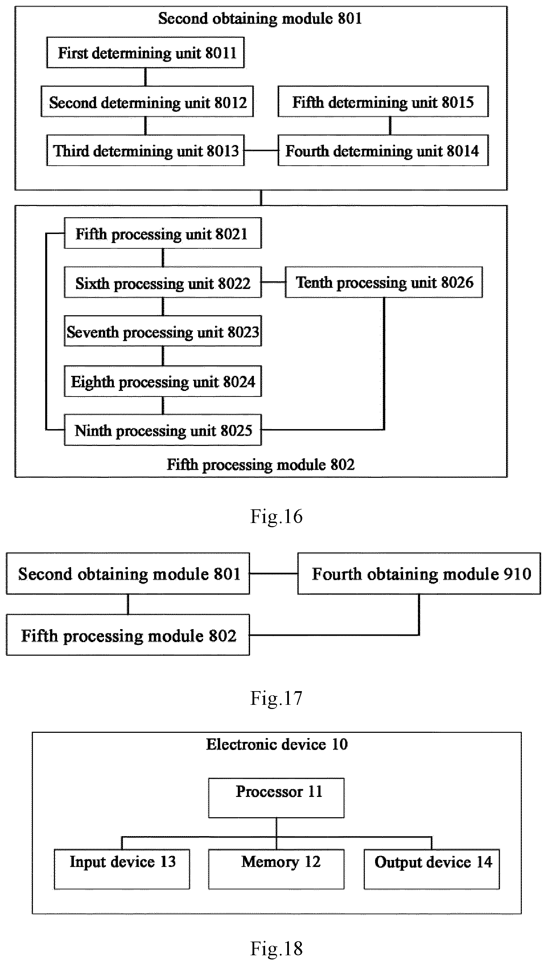

FIG 16 is a schematic diagram of a structure of an apparatus for training an instruction sequence optimization model according to another exemplary embodiment of this disclosure.

In an optional embodiment, the second obtaining module 801 includes:

a first determining unit 8011, configured to determine, based on at least one neural network model, training intermediate instruction sequences respectively corresponding to all the neural network models;

a second determining unit 8012, configured to determine, for any one of the training intermediate instruction sequences, based on a preset heuristic algorithm, at least one training optimization instruction sequence corresponding to the training intermediate instruction sequence and training optimization parameters respectively corresponding to all the training optimization instruction sequences;

a third determining unit 8013, configured to determine, based on a preset performance determining rule, performance results respectively corresponding to all the training optimization instruction sequences;

a fourth determining unit 8014, configured to determine, based on the performance results respectively corresponding to all the training optimization instruction sequences, a target training optimization instruction sequence with optimal performance among the training optimization instruction sequences; and

a fifth determining unit 8015, configured to take the training optimization parameter corresponding to the target training optimization instruction sequence as the optimal optimization parameter label corresponding to the training intermediate instruction sequence.

In an optional embodiment, the fifth processing module 802 includes:

a fifth processing unit 8021, configured to process all the training intermediate instruction sequences by using the instruction sequence optimization network, to obtain predicted processing results respectively corresponding to all the training intermediate instruction sequences;

a sixth processing unit 8022, configured to determine a network loss based on the predicted processing results respectively corresponding to all the training intermediate instruction sequences, the optimal optimization parameter labels respectively corresponding to all the training intermediate instruction sequences, and a preset loss function;

a seventh processing unit 8023, configured to update a network parameter of the instruction sequence optimization network based on the network loss, to obtain an updated network parameter;

an eighth processing unit 8024, configured to determine an updated instruction sequence optimization network based on the updated network parameter;

a ninth processing unit 8025, configured to take the updated instruction sequence optimization network as the instruction sequence optimization network, and transmit the same to the fifth processing unit 8021, to repeat the step of processing all the training intermediate instruction sequences by using the instruction sequence optimization network, to obtain predicted processing results respectively corresponding to all the training intermediate instruction sequences; and

a tenth processing unit 8026, configured to terminate the training in response to that a training termination condition is met, to obtain the instruction sequence optimization model.

In an optional embodiment, the sixth processing unit 8022 is specifically configured to:

determine an absolute error loss based on the predicted processing results respectively corresponding to all the training intermediate instruction sequences, the optimal optimization parameter labels respectively corresponding to all the training intermediate instruction sequences, and an absolute error loss function; determine a regularization loss based on the current network parameter and a regularization loss function; and determine the network loss based on the absolute error loss and the regularization loss.

FIG 17 is a schematic diagram of a structure of an apparatus for training an instruction sequence optimization model according to still another exemplary embodiment of this disclosure.

In an optional embodiment, the apparatus in this disclosure further includes:

a fourth obtaining module 910, configured to obtain training memory information corresponding to all the training intermediate instruction sequences; and

a fifth processing module 802, configured to train the pre-established instruction sequence optimization network based on all the training intermediate instruction sequences, the training memory information corresponding to all the training intermediate instruction sequences, and the optimal optimization parameter labels, to obtain the trained instruction sequence optimization model.

For beneficial technical effects corresponding to the exemplary embodiments of this apparatus, reference may be made to the corresponding beneficial technical effects in the part of exemplary method described above, and details are not described herein again.

Exemplary electronic device

FIG 18 is a schematic diagram of a structure of an electronic device according to an embodiment of this disclosure. The electronic device includes at least one processor 11 and a memory 12.

The processor 11 may be a central processing unit (CPU) or another form of processing unit having a data processing capability and/or an instruction execution capability, and may control another component in the electronic device 10 to perform a desired function.

The memory 12 may include one or more computer program products. The computer program product may include various forms of computer readable storage media, such as a volatile memory and/or a non-volatile memory. The volatile memory may include, for example, a random access memory (RAM) and/or a cache. The nonvolatile memory may include, for example, a read-only memory (ROM), a hard disk, and a flash memory. One or more computer program instructions may be stored on the computer readable storage medium. The processor 11 may execute one or more of the program instructions to implement the methods according to various embodiments of this disclosure that are described above and/or other desired functions.

In an example, the electronic device 10 may further include an input device 13 and an output device 14. These components are connected to each other through a bus system and/or another form of connection mechanism (not shown).

The input device 13 may further include, for example, a keyboard and a mouse.

The output device 14 may output various information to the outside. The output device 14 may include, for example, a display, a speaker, a printer, a communication network, and a remote output device connected by the communication network.

Certainly, for simplicity, FIG 18 shows only some of components in the electronic device 10 that are related to this disclosure, and components such as a bus and an input/output interface are omitted. In addition, according to specific application situations, the electronic device 10 may further include any other appropriate components.

Exemplary computer program product and computer readable storage medium

In addition to the foregoing methods and devices, the embodiments of this disclosure may also provide a computer program product, which includes computer program instructions. When the computer program instructions are run by a processor, the processor is enabled to perform the steps, of the methods according to the embodiments of this disclosure, that are described in the "exemplary method" section described above.

The computer program product may be program code, written with one or any combination of a plurality of programming languages, that is configured to perform the operations in the embodiments of this disclosure. The programming languages include an object-oriented programming language such as Java or C++, and further include a conventional procedural programming language such as a "C" language or a similar programming language. The program code may be entirely or partially executed on a user computing device, executed as an independent software package, partially executed on the user computing device and partially executed on a remote computing device, or entirely executed on the remote computing device or a server.

In addition, the embodiments of this disclosure may further relate to a computer readable storage medium, which stores computer program instructions. When the computer program instructions are run by a processor, the processor is enabled to perform the steps, of the methods according to the embodiments of this disclosure, that are described in the "exemplary method" section described above.

The computer readable storage medium may be one readable medium or any combination of a plurality of readable media. The readable medium may be a readable signal medium or a readable storage medium. The readable storage medium includes, for example, but is not limited to electricity, magnetism, light, electromagnetism, infrared ray, or a semiconductor system, an apparatus, or a device, or any combination of the above. More specific examples (a non-exhaustive list) of the readable storage medium include: an electrical connection with one or more conducting wires, a portable disk, a hard disk, a random access memory (RAM), a read-only memory (ROM), an erasable programmable read-only memory (EPROM or a flash memory), an optical fiber, a portable compact disk read-only memory (CD-ROM), an optical storage device, a magnetic storage device, or any suitable combination of the above.

Basic principles of this disclosure are described above in combination with specific embodiments. However, advantages, superiorities, and effects mentioned in this disclosure are merely examples but are not for limitation, and it cannot be considered that these advantages, superiorities, and effects are necessary for each embodiment of this disclosure. In addition, specific details described above are merely for examples and for ease of understanding, rather than limitations. The details described above do not limit that this disclosure must be implemented by using the foregoing specific details.

A person skilled in the art may make various modifications and variations to this disclosure without departing from the spirit and the scope of this application. In this way, if these modifications and variations of this application fall within the scope of the claims and equivalent technologies of the claims of this disclosure, this disclosure also intends to include these modifications and variations.

**Claims**

1. A method for compiling a neural network model, **characterized in** comprising:

   obtaining (step 201) a to-be-compiled neural network model;
   determining (step 202) an intermediate instruction sequence corresponding to the to-be-compiled neural network model based on the to-be-compiled neural network model;
   processing (step 203) the intermediate instruction sequence by using a pre-trained instruction sequence optimization model, to obtain a target optimization parameter corresponding to the intermediate instruction sequence;
   determining (step 204) an optimization instruction sequence corresponding to the intermediate instruction sequence based on the target optimization parameter; and
   converting (step 205) the optimization instruction sequence into an executable instruction sequence, to obtain a target instruction sequence that can be executed by a neural network processor corresponding to the to-be-compiled neural network model.

2. The method according to claim 1, wherein the processing (step 203) the intermediate instruction sequence by using a pre-trained instruction sequence optimization model to obtain a target optimization parameter corresponding to the intermediate instruction sequence comprises:

   performing (step 2031a) feature extraction on the intermediate instruction sequence by using a first feature extraction network in the instruction sequence optimization model, to obtain an instruction sequence feature;
   processing (step 2032) the instruction sequence feature by using a prediction head network in the instruction sequence optimization model, to obtain a processing result, wherein the processing result comprises an optimization parameter prediction probability corresponding to the intermediate instruction sequence; and
   determining (step 2033) the target optimization parameter based on the processing result and a preset mapping rule.

3. The method according to claim 2, further comprising:

   obtaining (step 301) a current memory information sequence;
   the processing (step 203) the intermediate instruction sequence by using a pre-trained instruction sequence optimization model to obtain a target optimization parameter corresponding to the intermediate instruction sequence further comprises:

   performing (step 2031b) feature extraction on the current memory information sequence by using a second feature extraction network in the instruction sequence optimization model, to obtain a memory information feature; and
   fusing (step 2031c) the instruction sequence feature and the memory information feature to obtain a fused feature; and
   the processing (step 2032) the instruction sequence feature by using a prediction head network in the instruction sequence optimization model, to obtain a processing result comprises:

   processing (step 20321) the fused feature by using the prediction head network, to obtain the processing result.

4. The method according to claim 3, wherein the fusing (step 2031c) the instruction sequence feature and the memory information feature to obtain a fused feature comprises:

   aggregating the instruction sequence feature according to a first aggregation rule, to obtain a first aggregation feature;
   aggregating the memory information feature according to a second aggregation rule, to obtain a second aggregation feature, wherein the second aggregation feature has a same dimension as the first aggregation feature in at least one direction; and
   concatenating the first aggregation feature and the second aggregation feature to obtain the fused feature.

5. The method according to claim 1, wherein the target optimization parameter comprises a memory management parameter, an operator execution mode parameter, and a tensor splitting parameter; and

   the determining (step 204) an optimization instruction sequence corresponding to the intermediate instruction sequence based on the target optimization parameter comprises:
   optimizing (step 2041) the intermediate instruction sequence based on the memory management parameter, the operator execution mode parameter, and the tensor splitting parameter, to obtain the optimization instruction sequence.

6. A method for training an instruction sequence optimization model, **characterized in** comprising:

obtaining (step 401) training intermediate instruction sequences respectively corresponding to at least one neural network model and optimal optimization parameter labels respectively corresponding to all the training intermediate instruction sequences; and

training (step 402) a pre-established instruction sequence optimization network based on all the training intermediate instruction sequences and the optimal optimization parameter labels respectively corresponding to all the training intermediate instruction sequences, to obtain a trained instruction sequence optimization model.

7. The method according to claim 6, wherein the training (step 402) a pre-established instruction sequence optimization network based on all the training intermediate instruction sequences and the optimal optimization parameter labels respectively corresponding to all the training intermediate instruction sequences, to obtain a trained instruction sequence optimization comprises:

processing (step 4021) all the training intermediate instruction sequences by using the instruction sequence optimization network, to obtain predicted processing results respectively corresponding to all the training intermediate instruction sequences;

determining (step 4022) a network loss based on the predicted processing results respectively corresponding to all the training intermediate instruction sequences, the optimal optimization parameter labels respectively corresponding to all the training intermediate instruction sequences, and a preset loss function;

updating (step 4023) a network parameter of the instruction sequence optimization network based on the network loss, to obtain an updated network parameter;

determining (step 4024) an updated instruction sequence optimization network based on the updated network parameter;

taking (step 4025) the updated instruction sequence optimization network as the instruction sequence optimization network, and repeating the step of the processing all the training intermediate instruction sequences by using the instruction sequence optimization network, to obtain predicted processing results respectively corresponding to all the training intermediate instruction sequences; and

in response to that a training termination condition is met, terminating (step 4026) the training to obtain the instruction sequence optimization model.

8. The method according to claim 7, wherein the determining (step 4022) a network loss based on the predicted processing results respectively corresponding to all the training intermediate instruction sequences, the optimal optimization parameter labels respectively corresponding to all the training intermediate instruction sequences, and a preset loss function comprises:

determining an absolute error loss based on the predicted processing results respectively corresponding to all the training intermediate instruction sequences, the optimal optimization parameter labels respectively corresponding to all the training intermediate instruction sequences, and an absolute error loss function;

determining a regularization loss based on the current network parameter and a regularization loss function; and

determining the network loss based on the absolute error loss and the regularization loss.

9. The method according to claim 6, wherein the obtaining (step 401) training intermediate instruction sequences respectively corresponding to at least one neural network model and optimal optimization parameter labels respectively corresponding to all the training intermediate instruction sequences comprises:

determining (step 4011), based on at least one neural network model, training intermediate instruction sequences respectively corresponding to all the neural network models;

for any one of the training intermediate instruction sequences, determining (step 4012), based on a preset heuristic algorithm, at least one training optimization instruction sequence corresponding to the training intermediate instruction sequence and training optimization parameters respectively corresponding to all the training optimization instruction sequences;

determining (step 4013), based on a preset performance determining rule, performance results respectively corresponding to all the training optimization instruction sequences;

determining (step 4014), based on the performance results respectively corresponding to all the training optimization instruction sequences, a target training optimization instruction sequence with optimal performance among the training optimization instruction sequences; and

taking (step 4015) the training optimization parameter corresponding to the target training optimization instruction sequence as the optimal optimization parameter label corresponding to the training intermediate instruction sequence.

10. The method according to claim 6, further comprising:

obtaining (step 510) training memory information corresponding to all the training intermediate instruction sequences; and
the training (step 402) a pre-established instruction sequence optimization network based on all the training intermediate instruction sequences and the optimal optimization parameter labels respectively corresponding to all the training intermediate instruction sequences, to obtain a trained instruction sequence optimization comprises:
training (step 402a) the pre-established instruction sequence optimization network based on all the training intermediate instruction sequences, the training memory information corresponding to all the training intermediate instruction sequences, and the optimal optimization parameter labels, to obtain the trained instruction sequence optimization model.

11. An apparatus for compiling a neural network model, **characterized in** comprising:

a first obtaining module (601), configured to obtain a to-be-compiled neural network model;
a first processing module (602), configured to determine an intermediate instruction sequence corresponding to the to-be-compiled neural network model based on the to-be-compiled neural network model;
a second processing module (603), configured to process the intermediate instruction sequence by using a pre-trained instruction sequence optimization model, to obtain a target optimization parameter corresponding to the intermediate instruction sequence;
a third processing module (604), configured to determine an optimization instruction sequence corresponding to the intermediate instruction sequence based on the target optimization parameter; and
a fourth processing module (605), configured to convert the optimization instruction sequence into an executable instruction sequence, to obtain a target instruction sequence that is executable by a neural network processor corresponding to the to-be-compiled neural network model.

12. The apparatus for compiling a neural network model according to claim 11, wherein the second processing module (603) includes

a first processing unit (6031a) which is configured to perform feature extraction on the intermediate instruction sequence by using a first feature extraction network in the instruction sequence optimization model, to obtain an instruction sequence feature;
a second processing unit (6032) which is configured to process the instruction sequence feature by using a prediction head network in the instruction sequence optimization model, to obtain a processing result; and
a third processing unit (6033) which is configured to determine the target optimization parameter based on the processing result and a preset mapping rule.

13. An apparatus for training an instruction sequence optimization model, **characterized in** comprising:

a second obtaining module (801), configured to obtain training intermediate instruction sequences respectively corresponding to at least one neural network model and optimal optimization parameter labels respectively corresponding to all the training intermediate instruction sequences; and
a fifth processing module (802), configured to train a pre-established instruction sequence optimization network based on all the training intermediate instruction sequences and the optimal optimization parameter labels respectively corresponding to all the training intermediate instruction sequences, to obtain a trained instruction sequence optimization model.

14. A computer readable storage medium, **characterized in that** the storage medium stores a computer program, and the computer program is used for implementing the method for compiling a neural network model according to any one of claims 1 to 5, or is used for implementing the method for training an instruction sequence optimization model according to any one of claims 6 to 10.

15. An electronic device, **characterized in that** the electronic device comprises:

a processor (11); and
a memory (12), configured to store processor-executable instructions,
wherein the processor is configured to read the executable instructions from the memory, and execute the instructions to implement the method for compiling a neural network model according to any one of claims 1 to 5, or execute the instructions to implement the method for training

**EP 4 468 202 A1**

an instruction sequence optimization model according to any one of claims 6 to 10.

Training intermediate
instruction sequences
respectively corresponding
to all neural network models

Optimal optimization parameter labels
respectively corresponding to all training
intermediate instruction sequences

Apparatus for training
an instruction
sequence optimization
model

Trained instruction
sequence optimization
model

To-be-compiled neural
network model

Apparatus for
compiling a neural
network model

Target
instruction
sequence

To-be-processed
data

Terminal device

Data
processing
result

Fig.1

Obtain a to-be-compiled neural network model

201

Determine an intermediate instruction sequence corresponding to
the to-be-compiled neural network model based on the to-be-compiled
neural network model

202

Process the intermediate instruction sequence by using a pre-trained
instruction sequence optimization model, to obtain a target optimization
parameter corresponding to the intermediate instruction sequence

203

Determine an optimization instruction sequence corresponding to the
intermediate instruction sequence based on the target optimization parameter

204

Convert the optimization instruction sequence into an executable
instruction sequence, to obtain a target instruction sequence that can be
executed by a neural network processor corresponding to the
to-be-compiled neural network model

205

Fig.2

Fig.3

Obtain a to-be-compiled neural network model — 201

Determine an intermediate instruction sequence corresponding to the to-be-compiled neural network model based on the to-be-compiled neural network model — 202

Perform feature extraction on the intermediate instruction sequence by using a first feature extraction network in an instruction sequence optimization model, to obtain an instruction sequence feature — 2031a

Process the instruction sequence feature by using a prediction head network in the instruction sequence optimization model, to obtain a processing result — 2032

Determine a target optimization parameter based on the processing result and a preset mapping rule — 2033

Optimize the intermediate instruction sequence based on a memory management parameter, an operator execution mode parameter, and a tensor splitting parameter that are included in the target optimization parameter, to obtain an optimization instruction sequence — 2041

Convert the optimization instruction sequence into an executable instruction sequence, to obtain a target instruction sequence that can be executed by a neural network processor corresponding to the to-be-compiled neural network model — 205

Fig.4

Intermediate instruction sequence → First feature extraction network → Instruction sequence feature → Prediction head network → Processing result

Fig.5

Obtain a to-be-compiled neural network model — 201

Determine an intermediate instruction sequence corresponding to the to-be-compiled neural network model based on the to-be-compiled neural network model — 202

Perform feature extraction on the intermediate instruction sequence by using a first feature extraction network in an instruction sequence optimization model, to obtain an instruction sequence feature — 2031a

Obtain a current memory information sequence — 301

Perform feature extraction on the current memory information sequence by using a second feature extraction network in the instruction sequence optimization model, to obtain a memory information feature — 2031b

Fuse the instruction sequence feature and the memory information feature to obtain a fused feature — 2031c

Process the fused feature by using a prediction head network, to obtain the processing result — 20321

Determine a target optimization parameter based on the processing result and a preset mapping rule — 2033

Determine an optimization instruction sequence corresponding to the intermediate instruction sequence based on the target optimization parameter — 204

Convert the optimization instruction sequence into an executable instruction sequence, to obtain a target instruction sequence that can be executed by a neural network processor corresponding to the to-be-compiled neural network model — 205

Fig.6

Intermediate
instruction sequence → | First feature extraction network | → Instruction sequence feature → | Feature fusion network | → Fused feature → | Prediction head network | → Processing result

Current memory
information sequence → | Second feature extraction network | → Memory information feature →

Fig.7

| Obtain training intermediate instruction sequences respectively corresponding to at least one neural network model and optimal optimization parameter labels respectively corresponding to all the training intermediate instruction sequences | 401 |

↓

| Train a pre-established instruction sequence optimization network based on all the training intermediate instruction sequences and the optimal optimization parameter labels respectively corresponding to all the training intermediate instruction sequences, to obtain a trained instruction sequence optimization model | 402 |

Fig.8

Determine, based on at least one neural network model, training intermediate instruction sequences respectively corresponding to all the neural network models ⌐ 4011

For any one of the training intermediate instruction sequences, determine, based on a preset heuristic algorithm, at least one training optimization instruction sequence corresponding to the training intermediate instruction sequence and training optimization parameters respectively corresponding to all the training optimization instruction sequences ⌐ 4012

Determine, based on a preset performance determining rule, performance results respectively corresponding to all the training optimization instruction sequences ⌐ 4013

Determine, based on the performance results respectively corresponding to all the training optimization instruction sequences, a target training optimization instruction sequence with optimal performance among the training optimization instruction sequences ⌐ 4014

Take the training optimization parameter corresponding to the target training optimization instruction sequence as an optimal optimization parameter label corresponding to the training intermediate instruction sequence ⌐ 4015

Process all the training intermediate instruction sequences by using an instruction sequence optimization network, to obtain predicted processing results respectively corresponding to all the training intermediate instruction sequences ⌐ 4021

Determine a network loss based on the predicted processing results respectively corresponding to all the training intermediate instruction sequences, optimal optimization parameter labels respectively corresponding to all the training intermediate instruction sequences, and a preset loss function ⌐ 4022

Update a network parameter of the instruction sequence optimization network based on the network loss, to obtain an updated network parameter ⌐ 4023

Determine an updated instruction sequence optimization network based on the updated network parameter ⌐ 4024

Take the updated instruction sequence optimization network as the instruction sequence optimization network ⌐ 4025

In response to that a training termination condition is met, terminate the training to obtain an instruction sequence optimization model ⌐ 4026

Fig.9

Obtain training memory information corresponding to all training intermediate instruction sequences — 510

Obtain training intermediate instruction sequences respectively corresponding to at least one neural network model and optimal optimization parameter labels respectively corresponding to all the training intermediate instruction sequences — 401

Train a pre-established instruction sequence optimization network based on all the training intermediate instruction sequences, the training memory information corresponding to all the training intermediate instruction sequences, and the optimal optimization parameter labels, to obtain a trained instruction sequence optimization model — 402a

Fig.10

Multi-layer recurrent neural network

Training instruction sequence feature

Training fusion feature

Multi-layer fully connected layer

Predicted processing result

Training intermediate instruction sequence

Feature fusion network

Training memory information

Training memory information feature

Two-layer recurrent neural network

Fig.11

First obtaining module 601

First processing module 602

Second processing module 603

Third processing module 604

Fourth processing module 605

Fig.12

First obtaining module 601

First processing module 602

Second processing module 603

First processing unit 6031a

Second processing unit 6032

Third processing unit 6033

Optimization unit 6041

Third processing module 604

Fourth processing module 605

Fig.13

First obtaining module 601

First processing module 602 —— Third obtaining module 701

Second processing module 603

First processing unit 6031a

Fourth processing unit 6031b

Second processing unit 6032

Fusion unit 6031c

Third processing unit 6033

Third processing module 604

Fourth processing module 605

Fig.14

Second obtaining module 801

Fifth processing module 802

Fig.15

Second obtaining module 801

First determining unit 8011

Second determining unit 8012 | Fifth determining unit 8015

Third determining unit 8013 —— Fourth determining unit 8014

Fifth processing unit 8021

Sixth processing unit 8022 —— Tenth processing unit 8026

Seventh processing unit 8023

Eighth processing unit 8024

Ninth processing unit 8025

Fifth processing module 802

Fig.16

Second obtaining module 801 —— Fourth obtaining module 910

Fifth processing module 802

Fig.17

Electronic device 10

Processor 11

Input device 13 | Memory 12 | Output device 14

Fig.18

Europäisches
Patentamt

European
Patent Office

Office européen
des brevets

# EUROPEAN SEARCH REPORT

Application Number

EP 24 15 4166

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | YANQI ZHOU ET AL: "Transferable Graph Optimizers for ML Compilers", ARXIV.ORG, CORNELL UNIVERSITY LIBRARY, 201 OLIN LIBRARY CORNELL UNIVERSITY ITHACA, NY 14853, 20 February 2021 (2021-02-20), XP081883047, * the whole document * ----- | 1-15 | INV. G06N3/006 G06F8/41 G06N3/10 G06N3/12 G06N5/01 |

TECHNICAL FIELDS
SEARCHED        (IPC)

G06N
G06F

The present search report has been drawn up for all claims

| Place of search | Date of completion of the search | Examiner |
|---|---|---|
| The Hague | 12 June 2024 | Papadakis, Georgios |

EPO FORM 1503 03.82 (P04C01)

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
...........................................................................
& : member of the same patent family, corresponding
document

**REFERENCES CITED IN THE DESCRIPTION**

**Patent documents cited in the description**

- CN 202310603567